# EUROPEAN PATENT APPLICATION

(11) **EP 4 154 964 A1**
(43) Date of publication of application: **29.03.2023**
(21) Application number: 21198890.2
(22) Date of filing: 24.09.2021
(51) Int. Cl.: B01D 39/18, B32B 1/02, B65D 85/804, D04H 1/00

(54) **THERMOPLASTIC-IMPREGNATED CELLULOSIC NONWOVEN AS A COMPOSTABLE FILTER MATERIAL FOR LIQUIDS**

(71) Applicant: Ahlstrom-Munksjö Oyj, 00100 Helsinki (FI)
(72) Inventor: Bardet, Raphaël, 38500 Voiron (FR); Vigoureux, Marjorie, 38150 Roussillon (FR)
(74) Representative: Hoffmann Eitle

(57) **Abstract**

The present invention relates to a heat sealable filter material for liquids that is fully compostable. The filter material is a thermoplastic-impregnated cellulosic nonwoven having a Textest Air Permeability of 50 to 1000 L/m²•s. The filter material can be laminated to a support layer without the additional use of an adhesive. Further aspects of the present invention include compostable packaging elements comprising the compostable filter material described herein.

## Description

### Technical field

The present invention relates to a heat sealable thermoplastic-impregnated cellulosic nonwoven that can be used as a compostable filter material for liquids such as tea or coffee. Further aspects of the present invention include compostable packaging elements comprising the compostable filter material described herein.

### Background art

As environmental protection requirements have become increasingly stringent, the use of sustainable materials is also playing a major role in the food industry. Packaging materials play a significant role in pollution of the environment. Especially in the case of single portions, the packaging ratio is extremely high. Products that fall into this category are beverage elements such as infusion bags or capsules for single-use preparation.

Various approaches to substituting individual components of packaging materials were investigated. In the beverage elements mentioned above, the filter material is a crucial component. Filter materials are generally made of nonwoven, such as wet-laid, spunbond or meltblown materials. In order to use nonwovens in the production of packaging materials, an important feature is the heat sealability. In nonwovens, such heat-sealing properties are generally conferred by thermoplastic fibers.

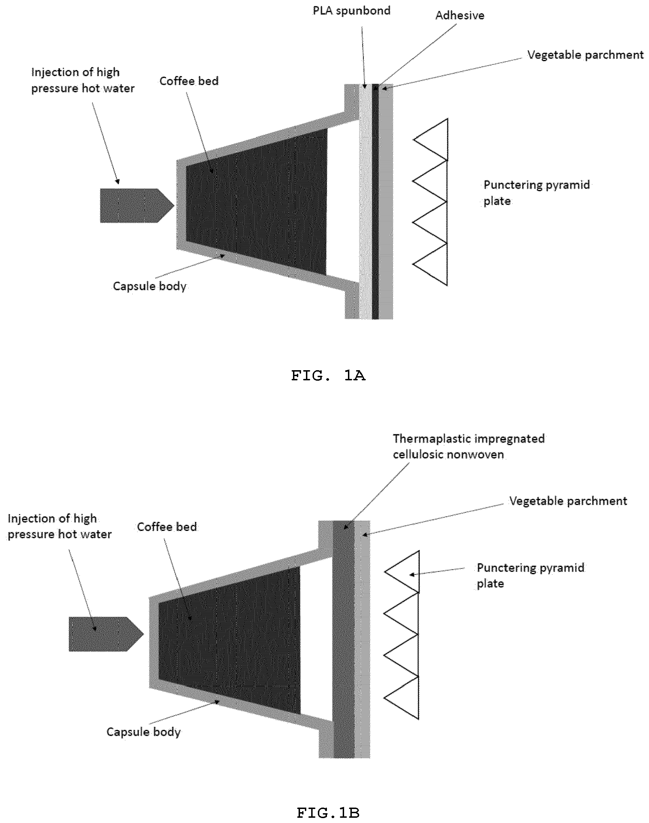

To produce a nonwoven that can be used as a beverage element, more sustainable biobased thermoplastic fibers can be used. These fibers can be compostable, making the beverage element even more sustainable. For example, in WO2017/187024 A1 a multilayer complex of polylactic acid (PLA) spunbond adhered to a vegetable parchment layer was proposed to seal a beverage capsule (see Figure 1A). The PLA spunbond material performs two main functions: First, it serves as a sealing layer onto the capsule. Second, it has a filtering function to prevent ground coffee from leaving the coffee capsule. However, the adhesives currently used for lamination of the spunbond and the vegetable parchment are non-compostable.

In a different approach, a wet-laid comprising cellulose fibers and PLA fibers can be used as a heat sealable media for tea bags or as a filter for coffee pods. This product has a lower carbon footprint than other purely synthetic nonwovens used as tea bags. Nevertheless, PLA fibers are compostable only under certain conditions, notably in an industrial setting, as specified in EN 13432. One of the critical parameters is the temperature for composting. It has to be between 55 and 60 °C for a sample to pass the industrial composting test. This is of course far from the thermal conditions in a domestic composter. Replacing PLA fibers with other types of biopolymer fibers is a challenging task, as fiber spinning is a complex process. In addition, the price of synthetic biopolymers remains relatively high.

Another approach for coffee capsule lids would be to use an extrusion coating or varnish coating on the parchment layer instead of a nonwoven layer that serves as heat sealing layer. However, this solution would not be satisfactory because the nonwoven layer also serves as a filter. An extruded layer would form a continuous film. When used in a coffee capsule lid, this film would create some bubbling effect, which is not desired during the percolation step.

### Technical problem

Accordingly, there is a demand for a heat sealable filter material for liquids that is fully compostable, preferably home compostable. The heat sealability should be obtained without using an additional adhesive layer causing sustainability problems. Such a filter material should have well-established or even improved percolation properties. Moreover, the filter material should be available by a simple method and at low costs. Further, there is a demand for a compostable packaging element comprising the compostable filter material.

### Summary of the invention

The present invention solves the problems of the prior art by providing a thermoplastic-impregnated cellulosic nonwoven as a filter material for liquids. By impregnating a cellulosic nonwoven with a thermoplastic binder, the invention provides a surprisingly simple solution for achieving a heat sealable filter material. Such a thermoplastic-impregnated cellulosic nonwoven can be laminated to a support layer without the additional use of an adhesive.

Cellulose fibers are known as biodegradable packaging material. It follows that, due to the plain composition of the invention's thermoplastic-impregnated cellulosic nonwoven, the composability merely depends on the thermoplastic binder. Depending on the binder that is chosen, the filter material of the present invention may even be home compostable. Hence, the filter material exhibits enhanced biodegradability and decomposition rate after disposal.

Surprisingly, it has been found that the specific air permeability imparts improved percolation properties to the filter material of the invention compared to beverage filter materials known in the art. In detail, the filter material has a Textest Air Permeability of 50 to 1000 L/m²·s at 196 Pa.

Besides, the invention also provides a compostable packaging element, comprising the compostable filter material. The main use thereof lies in beverage applications. This includes lidding solutions for single serve coffee capsules or heat sealable beverage filters such tea bags or filters for coffee pods.

The invention encompasses the following embodiments:
Embodiment 1. Compostable filter material for liquids,
   wherein the filter material is a heat sealable thermoplastic-impregnated cellulosic nonwoven, the filter material having a Textest Air Permeability of 50 to 1000 L/m²·s at 196 Pa, measured according to ISO 9237.
Embodiment 2. Compostable filter material according to embodiment 1,
   wherein the filter material has a pore size distribution including smallest pores with a minimum pore size and largest pores with a maximum pore size, wherein the mean pore size of the filter material is of from 10 to 60 µm.
Embodiment 3. Compostable filter material according to embodiment 2, wherein the largest pores have a maximum pore size of at least 50 µm, preferably of from 50 to 120 µm.
Embodiment 4. Compostable filter material according to embodiment 3, wherein the smallest pores have a minimum pore size of from 1 to 30 µm.
Embodiment 5. Compostable filter material according to any of embodiments 1 to 4,
   wherein the thermoplastic-impregnated cellulosic nonwoven comprises a cellulosic nonwoven material and at least one thermoplastic binder, the cellulosic nonwoven material comprising cellulose based fibers.
Embodiment 6. Compostable filter material according to embodiment 5,
   wherein the amount of thermoplastic binder is of from 10 to 75 wt%, based on the total weight of the thermoplastic-impregnated cellulosic nonwoven, and / or
   wherein the thermoplastic binder is a compostable binder, preferably wherein the thermoplastic binder is a home compostable binder.
Embodiment 7. Compostable filter material according to embodiment 6,
   wherein the amount of the cellulose based fibers in the cellulosic nonwoven material is 90 wt% or more, based on the total weight of the cellulosic nonwoven material; and/or
   wherein the cellulose based fibers are natural cellulosic fibers or man-made cellulosic fibers or a mixture of both, the cellulose based fibers preferably being a mixture having a ratio of natural cellulosic fibers to man-made cellulosic fibers of from 7:3 to 9:0.5; and/or
   wherein the thermoplastic binder is one or more selected from the group consisting of polyurethane, polybutylene succinate and polylactic acid, preferably wherein the thermoplastic binder is polyurethane.
Embodiment 8. Compostable filter material according to any of embodiments 1 to 7,
   wherein the thermoplastic-impregnated cellulosic nonwoven has a basis weight of at least 15 g/m², preferably between 20 and 90 g/m²; and/or
   wherein the thermoplastic-impregnated cellulosic nonwoven has a thickness of at least 60 µm, preferably between 80 and 150 µm; and/or
   wherein the thermoplastic-impregnated cellulosic nonwoven has a mean flow pore diameter of between 10 and 50 µm.
Embodiment 9. Compostable packaging element, comprising the compostable filter material according to any of embodiments 1 to 8.
Embodiment 10. Compostable packaging element of embodiment 9, wherein the compostable packaging element is a coffee capsule, a coffee capsule lid, or a tea bag.
Embodiment 11. Compostable packaging element according to embodiment 10, wherein the compostable packaging element is a coffee capsule lid, the lid further comprising a cellulosic support layer.
Embodiment 12. Method for producing a compostable filter material as defined in any of embodiments 1 to 11, the method comprising:
   i) providing a cellulosic nonwoven;
   ii) impregnating the cellulosic nonwoven with a thermoplastic binder.
Embodiment 13. Use of a compostable filter as defined in any of embodiments 1 to 11 in a method for producing coffee.

Where the present description refers to "preferred" embodiments/features, combinations of these "preferred" embodiments/features shall also be deemed as disclosed as long as this combination of "preferred" embodiments/features is technically meaningful.

Hereinafter, the use of the term "comprising" should be understood as disclosing, as a more restricted embodiment, the term "consisting of" as well, as long as this is technically meaningful.

### Brief Description of Figures

**Fig. 1A****:** "Nespresso" type beverage capsule not within the scope of the present invention that has a multilayered lid of PLA spunbonded adhered to a vegetable parchment support layer by a non-compostable adhesive.
**Fig. 1B****:** "Nespresso" type beverage capsule according to the present invention having a heat sealable thermoplastic-impregnated cellulosic nonwoven as a compostable filter material for liquids.
**Fig. 2****:** "K-cup" type beverage capsule according to the present invention having a heat sealable thermoplastic-impregnated cellulosic nonwoven as a compostable filter material for liquids.
**Fig. 3****:** Schematic illustration of impregnating a nonwoven with a thermoplastic binder.
**Fig. 4A****:** Schematic illustration of impregnating the cellulosic nonwoven with a thermoplastic binder and assembling it to a support layer while the binder is still wet.
**Fig. 4B****:** Schematic illustration of impregnating the cellulosic nonwoven with a thermoplastic binder, which after drying is assembled and laminated to a support layer provided with a small amount of binder.
**Fig. 4C****:** Schematic illustration of impregnating the cellulosic nonwoven with a thermoplastic binder by directly laminating it to a support layer to which a sufficient amount of thermoplastic binder to impregnate the cellulosic nonwoven is deposited.
**Fig. 5**: Particle size distribution of the coffee sample used in the examples.

### Detailed Description of the Invention

The present invention relates to a compostable filter material for liquids, wherein the filter material is a heat sealable thermoplastic-impregnated cellulosic nonwoven and has a Textest Air Permeability of 50 to 1000 L/m²·s at 196 Pa.

In the context of the present invention, the following definitions and analytical methods apply.

As described above, the first aspect of the present invention relates to the filter material being compostable. The expression "compostable" is generally defined in line with EN13432. The term "compostable filter material" designates a filter material comprising a maximum of 10% and preferably of 5% by weight of non-compostable components, thereby meeting EN13432. The expression "compostable" when applied to a material or a product means that the material, or the entire product, will both biodegrade and disintegrate. By "biodegrade" it is meant that the chemical structure or the material breaks down under the action of microorganisms. By the term "disintegrates" it is meant that the material, or the product made from it, will physically fall apart into fine visually indistinguishable fragments, at the end of a typical composting cycle.

An "industrial compostable" material may be compostable as described above in an industrial setting: The material may disintegrate and biodegrade at temperatures between 55 °C to 60 °C in less than 6 months. In detail, disintegration in an industrial setup may take less than 3 months, while biodegradation may take less than 6 months. If a material is described as "home compostable," it is compostable as described above under conditions present in a domestic composter setting: The material may disintegrate and biodegrade at temperatures below 55 °C, preferably at temperatures between 10 to 45 °C and most preferably between 25 to 30 °C in less than 12 months. In detail, disintegration may take less than 6 months, while biodegradation may take less than 12 months in a domestic composter setting.

The present invention is compostable as described above since it comprises at least one compostable thermoplastic binder. In order to be considered a "compostable thermoplastic", the chains of the thermoplastic must break down under the action of the microorganisms, so that total mineralization is achieved at a high rate compatible with the normal composting process of vegetable waste. The term "mineralization" refers to the conversion of a material into CO₂, water, inorganic compounds and biomass under aerobic conditions.

The "thermoplastic binder" as used herein, refers to a plastic polymer that becomes moldable at a certain elevated temperature and solidifies upon cooling. Any thermoplastic compostable binder is suitable for providing the heat sealable filter material of the present invention. Preferably the thermoplastic binder is a home compostable binder. Preferably the thermoplastic binder may have a melting temperature of from 200 to 95°C, preferably of from 200 to 100 °C, more preferably 190 to 105 °C and most preferably 180 to 110 °C. Exemplary binder emulsions according to the present invention comprise polyurethane (PU), polybutylene succinate (PBS) and PLA. The preferred thermoplastic binder may be polyurethane. This binder may be home compostable and thus provides a heat sealable filter material having an enhanced biodegradability and decomposition rate after disposal. Examples of home compostable PU binders include modified PU, i.e. a PU modified by inserting one or more further monomers via copolymerization to the PU, such as ST6515 from SciTech.

A key aspect of the present invention is the compostable filter material for liquids. The term "filter material" as used herein refers to a solid material suitable for filtration. Thus, the filter material of the present invention is inert when used in a liquid. In other words, once the thermoplastic binder has dried, it is neither soluble in the liquid nor crosslinked.

"Filtration" in the context of the present invention describes a physical separation progress by using a filter material. A "filter material for liquids" as referred to herein has a complex structure through which a liquid and fine particles below a certain size, called the filtrate, can pass. Particles above a certain size cannot pass through the filter material and form a filter cake on top of the filter material.

The filter material used in the present invention may comprise a cellulosic nonwoven material, comprising cellulose-based fibers and being fully home compostable as defined above. The term "nonwoven" can be used interchangeably with the term "paper" for the purposes of the present invention unless otherwise specifically indicated. The term "cellulosic nonwoven" refers to a fabric-like sheet having a structure of individual fibers derived or prepared from cellulose. These are entangled and interlaid with each other, but not in an identifiable manner as in a woven or knitted fabric. Nonwovens can be formed from many processes such as, for example, spin laying, carding, air laying (also known as dry laying) and water laying processes. These result in spin-laid, carded, air-laid (also known as dry-laid) and wet-laid nonwovens respectively.

The cellulosic nonwoven used in the present invention may preferably be a wet-laid nonwoven made on a paper machine. A wet-laid nonwoven may be produced by suspending fibers in water, pumping the dispersion in order to continuously deposit the fibers on a forming wire before water is drawn off. The cellulosic nonwoven can have a single-layer structure or a two-layer or multilayer structure. A cellulosic nonwoven with at least a two-layer structure can be obtained using a paper machine equipped with a headbox with multiple compartments. The different layers are formed simultaneously on a continuously moving forming wire of a paper machine. A cellulosic nonwoven with at least two layers may be obtained without using binders in between layers.

The term "fiber" as used herein refers to a material form characterized by an extremely high ratio of length to diameter. Generally, cellulose fibers (natural and man-made) have a range of diameters and length that depends on fiber type and source of fiber. The average length of a fiber as preferably used in the filter material of the present invention may be in the range of between from 0.1 mm to 12 mm and preferably from 1 mm to 10 mm. The diameter of a fiber may be in the range of from 10 µm to 50 µm and preferably from 10 µm to 40 µm. The aspect ratio (ratio of fiber length to fiber diameter) of a fiber may therefore be in the range of from 2 to 1,200 and preferably from 25 to 1,000. The terms "fiber" and "filament" can be used interchangeably for the purposes of the present invention unless otherwise specifically indicated.

The cellulosic nonwoven of the present invention substantially consists of cellulose. It may comprise natural cellulosic fibers, including pulp, or man-made cellulosic fibers or a mixture of both. Man-made cellulosic fibers are also known as regenerated cellulose fibers. There are two main classes of regenerated cellulose: Lyocell and Viscose, aka Rayon. The cellulosic nonwoven may preferably comprise natural cellulosic fibers and man-made cellulosic fibers. The ratio of natural cellulose to man-made cellulosic fiber in the cellulosic nonwoven of the present invention may be between 7:3 and 9:0.5 and preferably between 8:2.5 and 9:1. The overall cellulose-based fiber content may be above 90 wt%, preferably above 95 wt% and more preferably above 97 wt% based on the total weight of the nonwoven. The cellulosic nonwoven may further comprise less than 10 wt%, preferably less than 5 wt% and more preferably less than 3 wt% additives based on the total weight of the nonwoven. Such additives may comprise carboxymethyl cellulose (CMC) as binder and PAE (polyamide-epichlorohydrin) Kymene. The CMC may act as a binder improving the quality of the paper. PAE Kymene may act as a wet strength agent. However, as the latter is not biodegradable, it is preferable to kept its amount low.

In detail, the cellulosic nonwoven may comprise 0% to 55%, preferably 15% to 55% and more preferably 25% to 54% natural cellulose pulp from annual plants, based on the total weight of the nonwoven. Natural cellulose pulp from any annual plant suitable in providing the desired properties of the present invention may be used. An example of an annual plant is abaca. Abaca fibers tend to be relatively long. They can be introduced to provide mechanical strength to the cellulosic nonwoven. This is especially of importance during paper manufacturing process.

The cellulosic nonwoven may also comprise refined cellulosic materials. Refining is a mechanical treatment that creates fibrillation and to some extent the breakage of cellulose fibers. An indicator for the level of refinement is the Schopper-Riegler degree (°SR). The Schopper-Riegler degree specifies the freeness of a fiber's suspension: A greater °SR equates to slower draining. The °SR values as used herein were measured following a method adapted from ISO 5267-1:1999.

The cellulosic nonwoven may comprise 0 wt% to 40 wt%, preferably 15 wt% to 38 wt% and more preferably 30 wt% to 36 wt% softwood fibers and 0 wt% to 55 wt%, preferably 25 wt% to 54 wt% and more preferably 45 wt% to 52 wt% hardwood fibers, each based on the total weight of the nonwoven. Softwood fibers are smaller in length relative to abaca fibers but longer than hardwood fibers. Softwood and hardwood fibers are the most commonly used fibers in paper making. The softwood and hardwood fibers may be refined, having a refining level between 30 and 60 °SR.

The cellulosic nonwoven may moreover comprise 0 wt% to 10 wt%, preferably 2 wt% to 9 wt% and more preferably 5 wt% to 8 wt% flocs, based on the total weight of the nonwoven. Flocs are highly refined cellulose pulps, usually softwood or hardwood pulps that are subjected to very high refining. The flocs of softwood and hardwood may have a level of refining between 75 and 85 °SR. Flocs can be used to obtain a tighter pore structure in the nonwoven.

In addition, the cellulosic nonwoven may each independently comprise 0 wt% to 30 wt% and preferably 5 wt% to 25 wt% of Lyocell and Rayon, based on the total weight of the nonwoven. These fibers tend to have a bigger diameter relative to natural cellulose fibers and also tend to be longer. They also tend to be smooth and without much fibrils. Man-made cellulosic fibers are useful to open the structure of the cellulosic nonwoven.

Last but not least, the cellulosic nonwoven may comprise each independently or in combination 0 wt% to 1.5 wt%, preferably 0.5 wt% to 1.3 wt% and more preferably 0.9 wt% to 1.2 wt% of a wet strength agent such as PAE Kymene and 0 wt% to 3 wt%, preferably 1 wt% to 2.8 wt% and more preferably 2 wt% to 2.7 wt% of a binder such as CMC, each based on the total weight of the nonwoven.

In one embodiment, the cellulosic nonwoven of the present invention may comprise 0 wt% to 55 wt% natural cellulose pulp from annual plants, preferably abaca, 0 wt% to 40 wt% softwood, 0 wt% to 55 wt% hardwood, 0 wt% to 10 wt% flocs, 0 wt% to 20 wt% Lyocell, 0 wt% to 20 wt% Rayon, 0 wt% to 1.5 wt% PAE Kymene and 0 wt% to 3 wt% CMC, based on the total weight of the nonwoven.

In a preferred embodiment, the cellulosic nonwoven may comprise 15 wt% to 55 wt% natural cellulose pulp from annual plants, preferably abaca, 15 wt% to 38 wt% softwood, 25 wt% to 54 wt% hardwood, 2 wt% to 9 wt% flocs, 5 wt% to 16 wt% Lyocell, 5 wt% to 16 wt% Rayon, 0.5 wt% to 1.3 wt% PAE Kymene and 1 wt% to 2.8 wt% CMC, based on the total weight of the nonwoven.

In a more preferred embodiment, the cellulosic nonwoven may comprise 25 wt% to 54 wt% natural cellulose pulp from annual plants, preferably abaca, 30 wt% to 36 wt% softwood, 45 wt% to 52 wt% hardwood, 5 wt% to 8 wt% flocs, 8 wt% to 14 wt% Lyocell, 8 wt% to 14 wt% Rayon, 0.9 wt% to 1.2 wt% PAE Kymene and 2 wt% to 2.7 wt% CMC, based on the total weight of the nonwoven.

In a particular preferred embodiment, the cellulosic nonwoven of the present invention may consist of 52 wt% abaca, 34.7 wt% softwood, 9.6 wt% Rayon, 2.6 wt% CMC and 1.1 wt% PAE Kymene, based on the total weight of the nonwoven. In another particular preferred embodiment, the cellulosic nonwoven of the present invention may consist of 28.6 wt% abaca, 50.9 wt% hardwood, 7.6 wt% flocs, 12 wt% Lyocell and 1 wt% PAE Kymene, based on the total weight of the nonwoven.

The cellulosic nonwoven of the present invention may have any basis weight and thickness suitable to provide properties desired for a beverage element. The term "basis weight" as used herein refers to the area density of a paper product. The basis weight of nonwovens is usually expressed in weight per unit area, for example in grams per square meter (gsm = g/m²) or ounces per square foot (osf). The terms "basis weight" and "grammage" can be used interchangeably for the purposes of the present invention unless otherwise specifically indicated. The basis weight as used herein was measured following the standard ISO 536. Before the impregnation step, the cellulosic nonwoven may have a basis weight of at least 12 g/m², preferably between 16 and 60 g/m², more preferably between 18 and 45 g/m² and most preferably between 20 and 38g/m². The thermoplastic-impregnated cellulosic nonwoven may have a basis weight of at least 15 g/m², preferably between 20 and 90 g/m², more preferably between 22 and 70 g/m² and most preferably between 25 and 40 g/m². Furthermore, the impregnated cellulosic nonwoven may have a thickness of at least 60 µm preferably between 80 and 150 µm and more preferably between 85 and 140 µm when measured following the standard ISO 534.

An important aspect of the present invention relates to the thermoplastic-impregnated cellulosic nonwoven being heat sealable. The expression "heat sealable" as used herein refers to a hot-melt property that allows a material to be heat-bonded. The heat sealability of the present invention's filter material may result from the cellulosic nonwoven being impregnated with a thermoplastic binder emulsion as described in greater detail below. The amount of the binder in the filter material after impregnation may be of from 10 to 75 wt% and preferably 33 to 66 wt% based on the total weight of the thermoplastic-impregnated cellulosic nonwoven. It has been found that when the filter material comprises the binder in an amount within the ranges specified above, heat sealability, percolation properties and resistance of the filter material are superior. Using the thermoplastic binder at an amount of less than 10 wt%, the impregnation of the nonwoven may be insufficient. On the other hand, the filtration capability may be inferior if more than 50 wt% binder is used.

As described above, one main aspect of the present invention relates to the filter material having a Textest Air Permeability of 50 to 1000 L/m²·s at 196 Pa. The expression "air permeability" as referred to herein is the rate of airflow passing perpendicularly through a known area under a prescribed air pressure differential between the two surfaces of a material. The concept of "air permeability" is widely used in the textile industry to interpret the intrinsic characteristics of fabric. The air permeability is influenced by a fabric's material and structural properties, including the individual pore structure. The hydrodynamics of coffee extraction are influenced by the permeability of the coffee bed and the filter material. In other words, the interplay between the material and pore size of a filter on the one hand and the degree of coffee grinding on the other hand may be of importance with regard to the coffee extraction hydrodynamics. However, ground coffee that is used for extraction in coffee capsules upon high pressure, usually has a standardized degree of grind comprising a high amount of fine particles (< 100 µm). Thus, in the case of coffee capsules, the hydrodynamics are mainly influenced by the material and pore size of a filter. These two parameters however influence the air permeability of a filter material.

Several existing standards can be used for air permeability evaluation with different testing conditions. The air permeability of the filter material of the present invention was measured by a Textest Air Permeability at 196 Pa following the standard ISO 9237. This standard is suitable for rather open structures such as nonwovens. The inventors have surprisingly found that the filter material is provided with improved percolation properties, when the thermoplastic-impregnated cellulosic nonwoven has a Textest Air Permeability of 50 to 1000 L/m²·s at 196 Pa, preferably of 100 to 700 L/m²·s at 196 Pa, more preferably of 200 to 500 L/m²·s at 196 Pa and most preferably of 220 and 500 L/m²·s at 196 Pa.

Surprisingly, this applies equally to coffee capsules and tea bags, although completely different demands are placed on these two beverage elements. Without wishing to be bound to a theory, this could be attributable to the completely opposite pressure-time correlation in the two elements. In other words, filtration in coffee capsules occurs under high pressure within a relatively short period of time, while the preparation of tea involves a pressureless diffusion process over a much longer period of time.

When using a thermoplastic-impregnated cellulosic nonwoven having a Textest Air Permeability of below 50 L/m²·s at 196 Pa as a filter material for liquids in beverage applications, percolation properties are deteriorated. Using such a material for preparing a coffee capsules lid as described below, drippling, i.e. non-constant flow, may result upon extraction. Moreover, a very high pressure inside the capsule may occur and the capsule may even burst. Using said material for preparing tea bags or filters for coffee pods as described in greater detail below, a very low flow and thus a far too long extraction time would result.

When using a thermoplastic-impregnated cellulosic nonwoven having a Textest Air Permeability of greater than 1000 L/m²·s at 196 Pa as a filter material for liquids in beverage applications, percolation properties may also be disturbed. A very high pressure or drippling upon extraction may be observed when using such a material as coffee capsule lid. Moreover, the obtained volume may be very low.

Another possibility for measuring air permeability is the measurement in accordance with the ISO 5636-3 standard. It is commonly referred to as "Bendtsen Porosity." According to this standard, a 10 cm² sample is subjected to a pressure difference of 1.47 kPa to measure the air permeability. This standard is valid for air permeabilities between 30 and 1327 mL/min and generally used for materials having a rather tight pore structure. For ease of comparison of the Textest Air Permeability and the Bendtsen Porosity Table 1 below shows the differences in values obtained for three paper samples:

**Table 1: Comparison of air permeabilities of three paper samples measured according to ISO 9237 and ISO 5636-3 standard.**

| | **unit** | **Paper 1** | **Paper 2** | **Paper 3** |
|---|---|---|---|---|
| Textest Air Permeability (ISO 9237 at 200 Pa) | L/m²·s | 6.3 | 3.4 | 2.7 |
| Bendtsen Porosity (ISO 5636-3 at 1.47kPa) | mL/min | 2496 | 1320 | 980 |

Without wishing to be bound to any theory, Table 1 shows an almost linear dependency between the values obtained by the methods according to ISO 9237 and ISO 5636-3 standards. However, results shown in Table 1 foreshadow that the filter material of the present invention having a Textest Air Permeability as specified above will have a Bendtsen Porosity of far above the upper range of 1327 mL/min specified in ISO 5636-3. Indeed, a Bendtsen Porosity of above 5000 mL/min at 1.47 kPa has been measured for the inventive filter material. The exact value cannot be determined by this method since analysis is limited to 5000 mL/min when following the method of the ISO 5636-3 standard. Nevertheless, this measurement confirms that the filter material of the invention does not fulfill the requirement of a tight pore structure according to ISO 5636-3 standard.

As mentioned above, the air permeability may be influenced not only by the material's composition but also by its structural properties, i.e. the individual pore structure. The size of the pores in the cellulosic nonwoven was determined by porometry, using a Porometer (Porolux 1000) and is reported in microns (µm). The filter material of the present invention has a pore size distribution including smallest pores with a minimum pore size and largest pores with a maximum pore size. The mean pore size of the filter material is calculated from the average of the pore sizes in the filter material that are determined by porometry and may be of from 10 to 60 µm, preferably 14 to 50 µm and more preferably 18 to 45 µm and most preferably of from 20 to 40 µm. The largest pores of the filter material may have a maximum pore size of at least 50 µm, preferably of from 50 to 120 µm, more preferably of from 55 to 100 µm and most preferably 60 to 90 µm. The smallest pores of the filter material may have a minimum pore size of from 1 to 30 µm, preferably 2 to 20 µm, more preferably 4 to 15 µm and most preferably of from 5 to 10 µm.

Within these ranges, the percolation properties of a filter material may be improved. This applies equally to beverage elements used under high pressure, such as coffee capsules, as well as to beverage elements used under high pressure, such as tea bags, for the reasons assumed above.

As already described, the hydrodynamics of coffee extraction also depend on the pore sizes of a filter material. The improved performance of the invention's filter material may not be achieved at pore sizes below or above the ranges specified herein for the reasons described above with respect to the permeability. If pore sizes far above the above ranges were used, a nonwoven would no longer be suitable as a filter material. This is because the particles would no longer be separated from the liquid but would also pass through the nonwoven. On the other hand-side, if pore sizes below the above ranges were used, a nonwoven would no longer be suitable as a filter material.

In one embodiment, the filter material of the present invention may have smallest pores with a minimum pore size of from 1 to 30 µm, largest pores with a maximum pore size of at least 50 µm and a mean pore size of from 10 to 60 µm.

In a preferred embodiment, the filter material of the present invention may have smallest pores with a minimum pore size of from 2 to 20 µm, largest pores with a maximum pore size of from 50 to 120 µm and a mean pore size of from 14 to 50 µm.

In a more preferred embodiment, the filter material of the present invention may have smallest pores with a minimum pore size of from 4 to 15 µm, largest pores with a maximum pore size of from 55 to 100 µm and a mean pore size of from 18 to 45 µm.

In a most preferred embodiment, the filter material of the present invention may have smallest pores with a minimum pore size of from 5 to 10 µm, largest pores with a maximum pore size of from 60 to 90 µm and a mean pore size of from 20 to 40 µm.

Furthermore, when measuring the pore size by porometry with the Porometer (Porolux 1000), the mean flow pore diameter may also be determined. The mean flow pore diameter is the diameter at which 50% of the flow passes through the larger pores. The mean flow pore diameter of the filter material of the present invention may be of between 10 and 50 µm, preferably between 15 and 40 µm and more preferably between 20 and 35 µm.

It has been found that when using beverage elements comprising a filter material having a mean flow pore diameter within the ranges specified above, percolation properties are particularly improved when the filter material is used in beverage elements, e.g. coffee capsules or tea bags, regardless of the entirely different demands that are placed on these two beverage elements for the reasons already discussed above. If a filter material having a mean flow pore diameter above or below the inventive ranges specified herein is used in a beverage element, the performance may be deteriorated for the reasons described above with respect to the permeability.

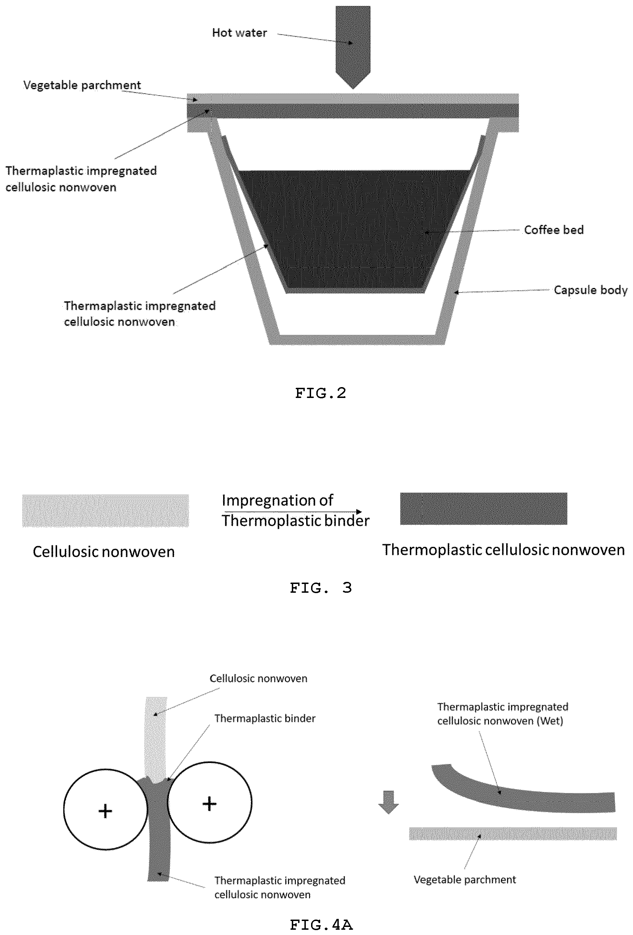

In another embodiment, the present invention relates to a compostable packaging element, comprising the filter material as described in detail above. The packaging element may be a beverage packaging element. The beverage packaging element may be a tea bag, a coffee filter, a filter for beverage pods or a lid intended to seal a beverage capsule, for instance coffee capsules. Some of the common coffee capsule on the market are the "Nespresso" types illustrated in Figures 1A and 1B and the "K-cup" types illustrated in Figure 2. However, the packaging element of the present invention comprising the filter material as described in detail above may comprise further types of coffee capsules not explicitly mentioned herein.

In a preferred embodiment, the beverage element is a coffee capsule lid. In order to form a lid suitable for sealing a beverage capsule, the beverage packaging element may further comprise a cellulosic support layer being assembled with the compostable filter material of the present invention. In coffee capsules a high pressure occurs upon coffee brewing. This high pressure deforms the lid of the capsule until a controlled piercing of the lid. The support layer enables a lid to withstand the pressure within the capsule until the lid is ruptured. The support layer may comprise a cellulosic portion, said cellulosic portion may be a monolithic cellulose structure such as vegetable parchment, glassine paper or tracing paper.

The term "vegetable parchment" as used herein refers to a paper made by treating a cellulose paper sheet with a gelatinizing agent comprising, for example, sulfuric acid under conditions where the reaction time between the gelatinizing agent and the cellulose is limited to control cellulose dissolution, hydrolysis and degradation. The treated paper is then washed thoroughly so as to remove the gelatinizing agent, after which it is dried. The bath chemical partially dissolves or gelatinizes the cellulose in the paper sheet. The dissolved cellulose is then precipitated when the bath chemical is diluted by washing the treated paper. This process, called parchmenting or parchmentizing, forms a very tough, stiff, smooth paper with an appearance somewhat like that of a genuine parchment. Because paper treated in this manner tends to become brittle and to wrinkle upon drying, it is sometimes treated with a plasticizing agent, for example glycerin, glucose or Sorbitol. Vulcanized fiber is a related product made by treating a cellulose paper sheet with a gelatinizing agent comprising, for example, zinc chloride.

The expression "glassine paper" as used herein refers to a paper obtained by super calendering a nonwoven, i.e. a paper. The repeated moisturizing and calendering during the super calendering process produces a very dense and non-porous paper. A "tracing paper" as used herein is a paper obtained from an aqueous suspension of paper pulp that has undergone very high levels of refining of cellulosic fibers that is also very dense and non-porous.

The support layer may optionally comprise an oxygen barrier layer and may have an oxygen transmission rate (OTR) of less than 1.5 mL/m²·day, preferably 0.1 to 1.5 mL/m²·day, more preferably 0.5 to 1 mL/m²·day. The term "oxygen transmission rate" of a material refers to the amount of oxygen (mL) that is transmitted through a specified area of the material (m²) during one day at atmospheric pressure of 1.013 bar (1 atm), a temperature of 23 °C and a relative humidity of 50%. The OTR (mL/m²·day) is measured in accordance with ASTM D 3985 and ASTM F 1927. The OTR of a material is a measure for the gas barrier properties of the material and indicates the gas barrier level. In other words, the lower the OTR of a material, the smaller the amount of gas being transmitted through the material which results in the material offering a high barrier to gas, especially to oxygen.

The present invention also relates to a simple and cheap method of preparing the compostable filter material for liquids of the present invention. As already mentioned above, replacing commonly known PLA fibers with other types of biopolymer fibers is a challenging task due to the complex fiber spinning process. In addition, the price of synthetic biopolymers remains relatively high.

According to the method of the present invention a compostable filter material as defined in above comprises: i) providing a cellulosic nonwoven; and ii) impregnating the cellulosic nonwoven with a thermoplastic binder.

The impregnation of the cellulosic nonwoven itself may be performed according to the following process:
First, as illustrated by Figure 3, a cellulosic nonwoven having the above described properties may be impregnated with an emulsion comprising the thermoplastic binder (optionally 30% - 60% of dry solids) as specified above. The emulsion comprising the thermoplastic binder may preferably be an aqueous emulsion, more preferably water. The impregnation step may be performed via any method suitable to achieve the filter material of the invention. For instance, the impregnation may be performed by applying the thermoplastic binder onto the nonwoven and passing it through rolls to strip off excess binder. The impregnation may also be performed by inserting or dipping the nonwoven into a bath or by spraying the binder emulsion onto the nonwoven. The impregnation process may be discontinuous or continuous, i.e. the entire nonwoven may be subjected to one of the aforementioned processes at once, or individual sections of the nonwoven can be subjected one after the other.

After the impregnation step, the nonwoven may in an optional step be processed further as described for the coffee capsule lid below before the following step is performed.

In a second step, the impregnated cellulosic nonwoven may be dried. The drying process may be performed at room temperature or at higher temperatures. Drying the impregnated nonwoven at higher temperatures may be beneficial in terms of time, hence in production efficiency. Care must be taken to ensure that the drying time is adjusted accordingly, i.e. shortened, when temperatures are increased in order to prevent any possible degradation. For instance, the impregnated nonwoven may be dried for 1 min at 90 °C. The drying process may further be performed under static or non-static conditions; in air; in an inert gas, such as argon or nitrogen; or under reduced pressure.

The present invention furthermore relates to a simple and cheap method of preparing packaging element, preferably a beverage packaging element, comprising the filter material as described in detail above.

Due to the heat sealability of the present invention's filter material, portions of the thermoplastic-impregnated cellulosic nonwoven may be heat-bonded to another article and/or another portion of the filter material. For example, a sheet-like filter material may be heat-sealed at its edge region to another sheet-like filter material in order to form a pouch-like structure, such as a tea bag or a coffee filter.

In a different approach, a sheet-like filter material may be assembled and laminated to a support layer as described above in order to provide the coffee capsule lid of the present invention. In the following, three exemplary methods of providing the inventive coffee capsule lid are described in greater detail.

In a first method (Fig. 4A), the cellulosic nonwoven may be impregnated with the thermoplastic binder emulsion of the present invention according to the first step described above for preparing the impregnated nonwoven. In a further step, however, the impregnated nonwoven may be assembled to the support layer that is described in detail above while the binder is still wet. After forming the laminate, the drying is performed.

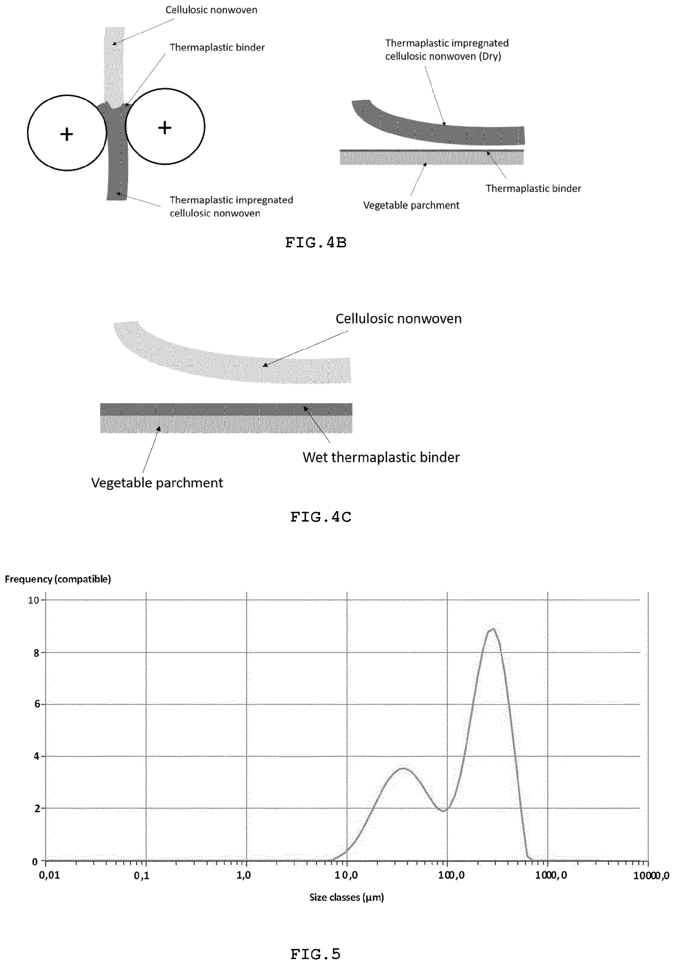

In a second method (Fig. 4B), the cellulosic nonwoven may be impregnated with the binder of the invention in a first step and dried in a second step as described above. Afterwards, the dried impregnated nonwoven may be assembled and laminated to support layer as described above, which is provided with a small amount of the thermoplastic binder emulsion. The use of an additional adhesive is not required as the very same binder emulsion as used for impregnating the nonwoven in a first step may be used.

In a third method (Fig. 4C), a sufficient amount of the thermoplastic binder as described in detail above is deposited to the support layer of the present invention in a first step. Afterwards, the cellulosic nonwoven is directly laminated to the support layer whereas the nonwoven is impregnated.

The unprocessed thermoplastic-impregnated filter material, the pouch-like structure as well as the laminate beverage capsule lid structure may be heat-sealed to other components of a beverage element, e.g. a coffee capsule (see Figures 1B and 2).

Moreover, the present invention relates to the use of a compostable filter material as defined in any of claims 1 to 11 in a method for producing coffee. The compostable filter material may be used as such at any operating pressure. This means that it may be used at atmospheric pressure as well as under high pressure, e.g. between 5 and 18 bar, without any unintended failure.

### Examples

Of the various end uses in beverage elements contemplated by the filter material of the present invention, the coffee capsule application is the one with the most limitations (see Test Protocol below). The following samples have therefore been designed to illustrate the effect of the present invention using lids with different properties on coffee capsules of the "Nespresso" type. The properties of the lid samples investigated herein are summarized in Table 2 below.

The following samples were prepared as follows: first, the nonwoven material (base) was impregnated with an aqueous emulsion comprising around 40% of dry solids of the thermoplastic binder. The impregnated material is then dried for 1 min at 90°C. Afterwards, the dry impregnated nonwoven was assembled to a support layer with a small amount of binder at the interface (see Fig. 4B). The total amount of emulsion binder was adjusted accordingly to achieve nonwovens with different binder amounts as specified in Table 2. Once the filter material and the vegetable parchment (support layer) are stacked they are dried for 1 min at 90 °C. The samples are then pressed with 200 kN by using heated plates for 5 s at 120 °C.

As support layer, two different types of vegetable parchment, PureBarrier or Sulflex (both from Ahlstrom-Munksjö Oyj), were used in the following samples. PureBarrier has improved oxygen barrier properties compared to Sulflex.

The preferred binder used herein is a commercially available polyurethane-based emulsion ST6515 provided by SciTech. In Comparative Samples an acrylic latex mix (from Carbobond and Hycar) has been used, however this binder is not home compostable. PLA and PBS based emulsions (from Chukyo-Yushi and OVOL Japan Pulp & Paper GmbH respectively) were also used, however, the home compostability of these samples is not complete according to the definition above.

Three grades of cellulosic wet-laid nonwovens were used as base material for preparing the filter materials of the invention. In Samples 1 - 3 and 6 - 8 the same nonwoven base material has been used. The Samples 4, 5, and 9 have each independently a different base paper. The different nonwoven recipes and properties are shown in Tables 3.1 to 3.3 below. Moreover, further properties of the nonwovens after the impregnation step are summarized for selected samples in these tables.

### Comparative Sample 1

A PLA Spunbond type nonwoven base (20 g/m²) was impregnated with a thermoplastic binder in an amount of 3-4 g/m² (acrylic mix) and laminated to a support layer (PureBarrier; 70 g/m²). The resulting laminate, except of the binder, is compostable in an industrial setting, as specified in EN 13432.

### Comparative Sample 2

A laminate was prepared as described for Comparative Sample 1, except that a PLA Spunbond nonwoven base with a grammage of 55 g/m² was used.

### Comparative Sample 3

A laminate was prepared as described for Comparative Sample 1, except that a PET/PE bicomponent Needlepunch nonwoven base (from Ahlstrom-Munksjö Oyj) with a grammage of 70 g/m² and an acrylic binder mix binder was used. The resulting laminate is non-compostable.

### Sample 1

A cellulosic wet-laid nonwoven base including CMC (37 g/m²) was impregnated with a thermoplastic binder in an amount of 4 g/m² (SciTech), laminated to a support layer (PureBarrier; 70 g/m²) and standard pressed. The resulting laminate is fully compostable in a domestic composter.

### Sample 2

A laminate was prepared as described for Sample 1 except that a thermoplastic binder in an amount of 6 g/m² (SciTech) was used. The resulting laminate is fully compostable in a domestic composter.

### Sample 3

A laminate was prepared as described for Sample 1 except that another thermoplastic binder in an amount of 12 g/m² (SciTech) was used. The resulting laminate is fully compostable in a domestic composter.

### Sample 4

A laminate was prepared as described for Sample 2 except that only a different cellulosic wet-laid nonwoven base without CMC having a grammage of 25 g/m² was used. The resulting laminate is fully compostable in a domestic composter.

### Sample 5

A laminate was prepared as described for Sample 2 except that only a different cellulosic wet-laid nonwoven base without CMC having a grammage of 31 g/m² was used. The resulting laminate is fully compostable in a domestic composter.

### Sample 6

A laminate was prepared as described for Sample 1 except that a not home-compostable thermoplastic binder (PBS) in an amount of 6 g/m² was used. The resulting laminate is compostable in an industrial setting, as specified in EN 13432.

### Sample 7

A laminate was prepared as described for Sample 1 except that a compostable thermoplastic binder (PLA, from Chukyo-Yushi) in an amount of 6 g/m² was used. The resulting laminate is compostable in an industrial setting, as specified in EN 13432.

### Sample 8

A laminate was prepared as described for Sample 2 except that a different support layer including CMC (Sulflex; 70 g/m²) was used. The resulting laminate is fully compostable in a domestic composter.

### Sample 9

A laminate was prepared as described for Sample 4 except that a different cellulosic wet-laid nonwoven base without CMC having a grammage of 31 g/m² was used. The resulting laminated beverage capsule lid structure is fully compostable in a domestic composter.

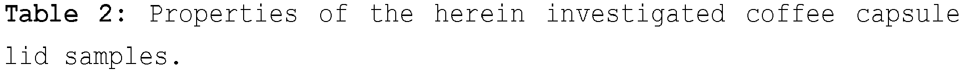

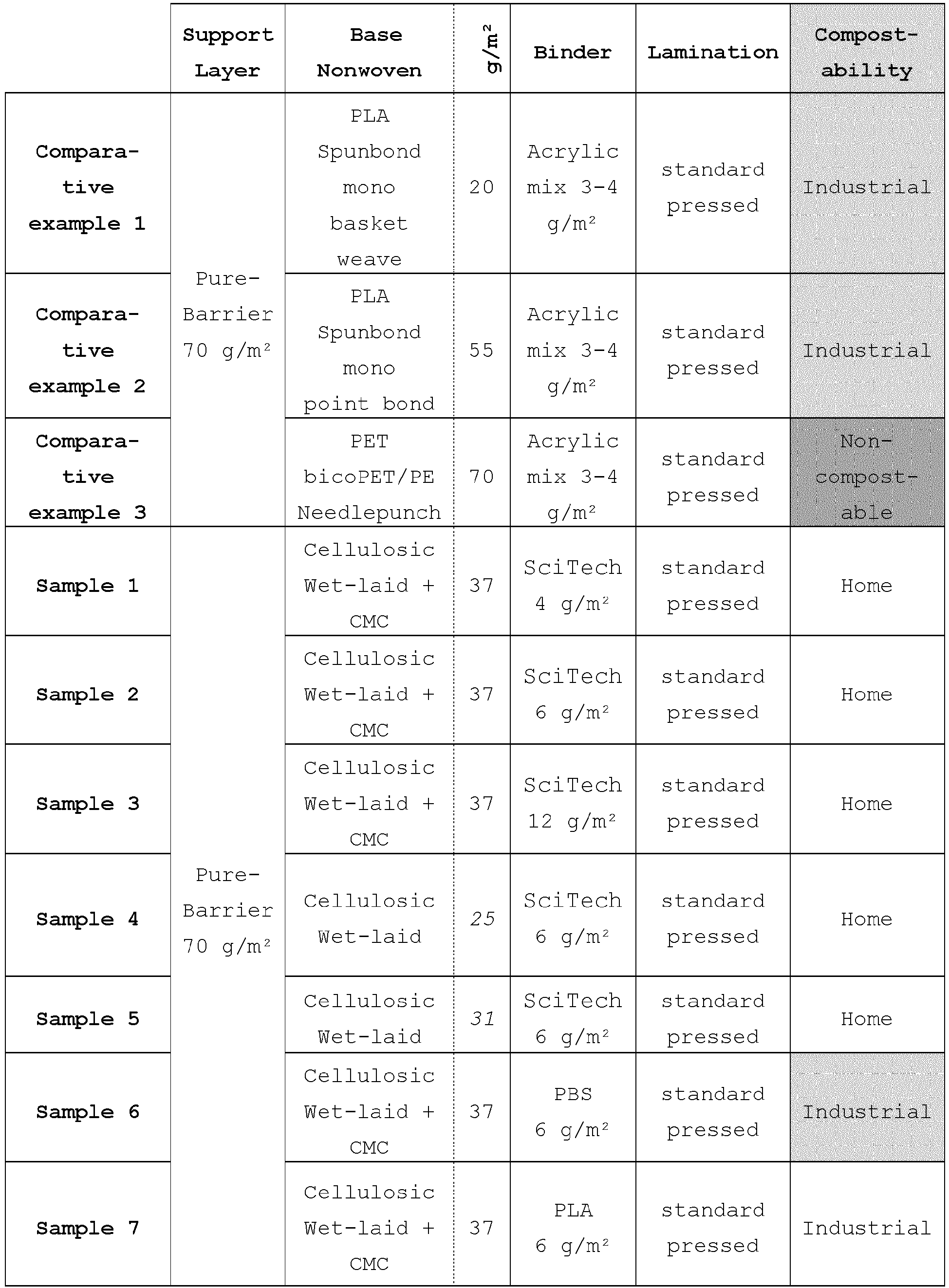

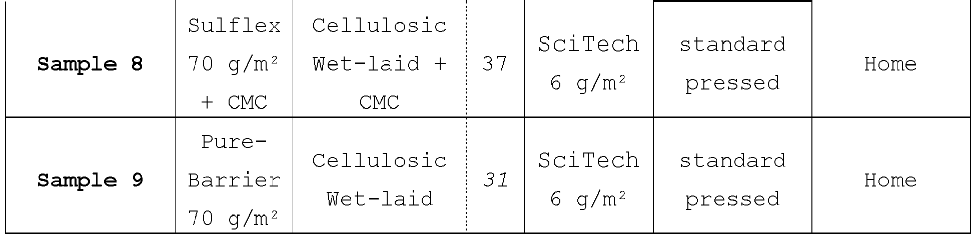

**Table 3.1: Properties of Comparative Samples 1 and 2.**

| | **Comparative Sample 1** | **Comparative Sample 2** |
|---|---|---|
| | PLA spunbond | PLA spunbond |
| **Basis weight (g/m²) of nonwoven before impregnation** | 20 | 55 |
| **Thickness (µm)** | 108 | 260 |
| **Composition** | 100 wt% PLA | 100 wt% PLA |
| **Air permeability and pore structure after impregnation** | | |
| **Textest Air Permeability @ 196Pa (L/m²·s)** | 2,800 | 1,400 |
| **Max pore size(µm)**** | 133,9 | 160,2 |
| **MFP (µm)**** | 59,9 | 66,5 |
| **Min pore size(µm)**** | 9,3 | 10,7 |
| ** obtained by calculating the average value of 2 measurements | | |

**Table 3.2: Properties of Sample 2.**

| | **Sample 2** |
|---|---|
| | Cellulosic nonwoven impregnated with 6g/m² of SciTech |
| **Basis weight (g/m²) of nonwoven before impregnation** | 37 |
| **Thickness (µm)** | 128 |
| **Composition (wt%)*** | (a) 52 |
| | (b) 35 |
| | (e) 10 |
| **Air permeability and pore structure after impregnation** | |
| **Textest Air Permeability @ 196Pa (L/m²·s)** | 220 |
| **Max pore size(µm)**** | 78.2 |
| **MFP (µm) **** | 22.3 |
| **Min pore size(µm)**** | 8.7 |
| *(a) Abaca; (b) Softwood; (c) Hardwood; (d) Flocs; (e) Rayon (8 mm, 1.7 dtex); (f) Lyocell (6mm, 1.7 dtex); sample 2 further comprises 3 wt% of CMC binder and 1 wt% PAE Kymene; the amounts in wt% within the composition are based on the total weight of the nonwoven. | |
| ** obtained by calculating the average value of 2 measurements. | |

**Table 3.3: Properties of Samples 4, 5 and 9**

| | **Sample 4** | **Sample 5** | **Sample 9** |
|---|---|---|---|
| | Cellulosic nonwoven impregnated with 6g/m² of SciTech | | |
| **Basis weight (g/m²) of nonwoven before impregnation** | 25 | 31 | 31 |
| **Thickness (µm)** | 101 | 114 | 127 |
| **Composition (wt%)*** | *First layer* | *First layer* | *First layer* |
| | (c) 100 | (c) 100 | (c) 100 |
| | *Second layer* | *Second layer* | *Second layer* |
| | (a) 38 | (a) 35 | (a) 35 |
| | (c) 36 | (c) 35 | (c) 35 |
| | (d) 10 | | (d) 15 |
| | (e) 16 | | (e) 15 |
| | | (f) 30 | |
| **First layer to second layer weight ratio** | **9:19** | **9:25** | **13:41** |
| **Air permeability and pore structure after impregnation** | | | |
| **Textest Air Permeability @ 196Pa (L/m²·s)** | 380 | 369 | 402 |
| **Max pore size(µm)**** | 106.9 | 81.3 | 77.6 |
| **MFP (µm)**** | 23.8 | 23.2 | 23.7 |
| **Min pore size(µm)**** | 7.2 | 7.0 | 6.6 |
| *(a) Abaca; (b) Softwood; (c) Hardwood (refined at 50° SR); (d) Flocs; (e) Rayon (8 mm, 1.7 dtex);(f) Lyocell (6mm, 1.7 dtex); samples 4, 5 and 9 further comprise 1 wt% of PAE Kymene; the amounts in wt% within the composition are based on the total weight of the nonwoven. | | | |
| ** obtained by calculating the average value of 2 measurements. | | | |

### Test protocol

Coffee capsules need to meet high material-specific requirements. During the percolation step, hot water is injected into the coffee capsule until the desired pressure value is reached. This deforms the lid and pierces it on a static piercing element, e.g. a pyramid plate. This process is illustrated by Figures 1A and 2B. A coffee lid thus must withstand the pressure within the capsule until it is ruptured. The inventors devised a protocol to evaluate this performance as follow.

The test involves preparing coffee capsule having the same body element, same coffee amount and closing the coffee capsule with the different lids described in the examples above.

The sealed coffee capsules are placed in a coffee machine (Pixie Machine) and the pressure during percolation, the obtained volume and the coffee flow are measured. The results are summarized in Table 5 below. The limits described in the following Table 4 were set.

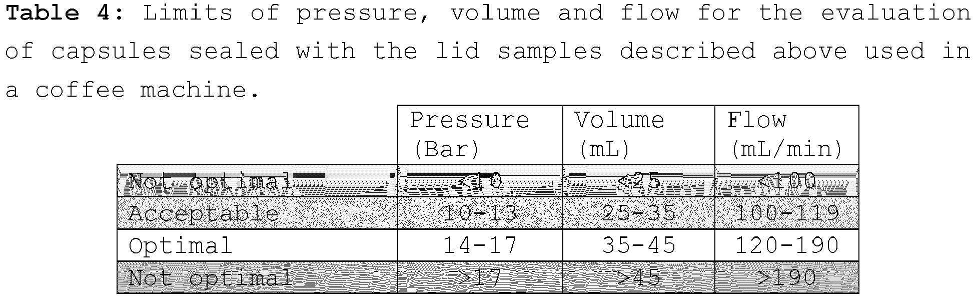

### Results

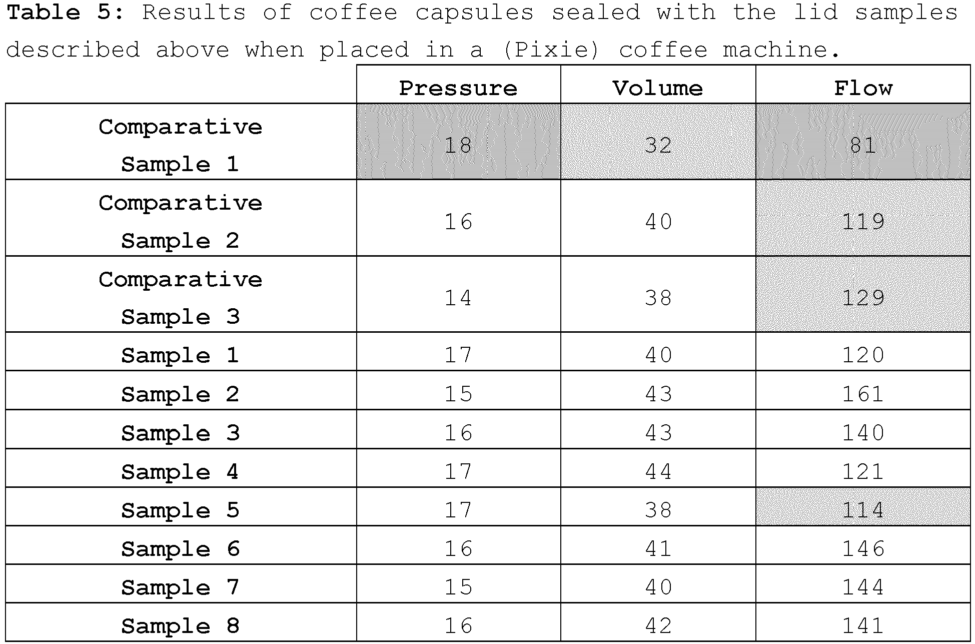

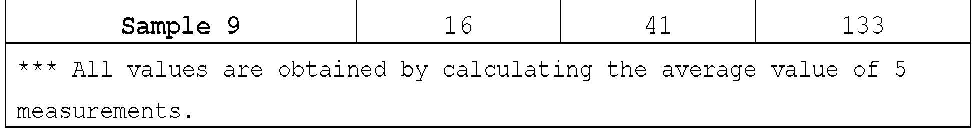

From Table 5 it can be taken that the samples according to the invention show optimal performance. Referring to the air permeability and pore size distributions summarized in Tables 3.1 to 3.3, it is found that the samples according to the invention have lower air permeability and smaller pore sizes than the PLA-based comparative samples.

The different samples tested can be separated into three groups:
- Group 1:: In Comparative Samples 1-3, nonwoven base materials with synthetic fibers were used.
- Group 2:: In Samples 1, 2, 3, 6, 7 and 8 the same cellulosic wet-laid nonwoven including CMC binder having a basis weight of 37 g/m² was used. The cellulosic wet laid has a single-layer structure as described above, i.e. it does not have a two-layer or a multilayer structure. Samples 1-3 are impregnated with varying amounts of thermoplastic binder (Samples 1-3 with respectively 4, 6 and 12 g/m² of SciTech ST6515). Samples 6 and 7 are impregnated with different thermoplastic binders (Sample 6 with PBS and Sample 7 with PLA). Sample 8 uses a different support layer than the one used for the other samples.
- Group 3:: Samples 4, 5 and 9 are cellulosic wet-laid samples having a two-layer structure. They are manufactured using a headbox with two compartments fed with different fiber mixes. The main advantage of having two layers being a structure gradient within the paper. The fibers composition is summarized in Table 3.3.

It has been found that the group 1 samples perform in a less optimal manner. Both, Comparative Sample 1 and 2, show a lower flow than (most of) the samples according to the invention. As described in detail above, the hydrodynamics of coffee extraction from coffee capsules are mainly influenced by the material and pore size, i.e. by the permeability of the filter material. This is because coffee that is used for extraction in coffee capsules upon high pressure, usually has a standardized degree of grind comprising a high amount of fine particles (< 100 µm). The coffee sample used in the Test Protocol of the invention as described below has the particle size distribution shown in Figure 5, measured with a Mastersizer 3000 (Malvern).

Synthetic fibers tend to be uniform in size and shape since they are man-made. They also have smooth surfaces. Without wishing to be bound by any theory, it is believed that the nonwovens made solely from synthetic fibers tend to have relatively uniform pore structure and also bigger pores compared to cellulosic wet-laid samples. Coffee particles are either not retained properly or tend to clog uniformly the pore structure.

On the other hand, cellulosic wet-laid samples are made with natural cellulose fibers with less uniform and random pore structure as well as smaller pores. Using cellulosic nonwovens during coffee brewing, the liquid seems to find a path to pass through the filter.

For Samples 1, 2 and 3, having the same cellulosic nonwoven but being impregnated with varying amounts of binder, differences in the flow have been observed (see Table 5). Without wishing to be bound by any theory, the combination of this nonwoven base and 6 g/m² of binder seems to be an optimal combination that might explain the increased flow. However, all these samples operate in the optimal range.

Moreover, differences in the pressure and flow have been observed between Samples 2, 4, 5 and 9. These differences may be explained by the different compositions of the nonwoven materials (bases). However, these samples cannot be compared directly since nonwoven bases having different fibers mix and structure have been used.

The inventors however found it advantageous using a paper with a two-layer structure, in view of a fine tuning of the nonwovens air permeability and thus filtration performance. In Samples 4, 5 and 9, the first layer is composed of hardwood fibers which tend to be finer and thus form a less permeable layer. The second layer is a more permeable layer due to the softwood and man-made cellulosic (i.e. Rayon or Lyocell) fibers used therein. These samples therefore have good filtration performance without compromising permeability.

Moreover, an increasing air permeability in the order Sample 5 < Sample 4 < Sample 9 has been found. Generally, the higher the ratio of the first layer that is solely made of hardwood (Sample 9 < Sample 5 < Sample 4), the lower the air permeability of the nonwoven base as a whole. However, it appears that by adding man-made cellulosic fiber (Rayon or Lyocell) to the second layer, the air permeability of the nonwoven base as a whole may increase. In addition, the addition of flocs appears to reduce the air permeability of the samples.

The coffee lids according to the present invention having a smaller pore sizes and smaller air permeabilities compared to the PLA-based samples thus perform superior.

## Claims

1. Compostable filter material for liquids,
wherein the filter material is a heat sealable thermoplastic-impregnated cellulosic nonwoven, the filter material having a Textest Air Permeability of 50 to 1000 L/m²·s at 196 Pa, measured according to ISO 9237.

2. Compostable filter material according to claim 1,
wherein the filter material has a pore size distribution including smallest pores with a minimum pore size and largest pores with a maximum pore size, wherein the mean pore size of the filter material is of from 10 to 60 µm.

3. Compostable filter material according to claim 2, wherein the largest pores have a maximum pore size of at least 50 µm, preferably of from 50 to 120 µm.

4. Compostable filter material according to claim 3, wherein the smallest pores have a minimum pore size of from 1 to 30 µm.

5. Compostable filter material according to any of claims 1 to 4,
wherein the thermoplastic-impregnated cellulosic nonwoven comprises a cellulosic nonwoven material and at least one thermoplastic binder, the cellulosic nonwoven material comprising cellulose based fibers.

6. Compostable filter material according to claim 5,
wherein the amount of thermoplastic binder is of from 10 to 75 wt%, based on the total weight of the thermoplastic-impregnated cellulosic nonwoven, and / or
wherein the thermoplastic binder is a compostable binder, preferably wherein the thermoplastic binder is a home compostable binder.

7. Compostable filter material according to claim 6,
wherein the amount of the cellulose based fibers in the cellulosic nonwoven material is 90 wt% or more, based on the total weight of the cellulosic nonwoven material; and/or
wherein the cellulose based fibers are natural cellulosic fibers or man-made cellulosic fibers or a mixture of both, the cellulose based fibers preferably being a mixture having a ratio of natural cellulosic fibers to man-made cellulosic fibers of from 7:3 to 9:0.5; and/or
wherein the thermoplastic binder is one or more selected from the group consisting of polyurethane, polybutylene succinate and polylactic acid, preferably wherein the thermoplastic binder is polyurethane.

8. Compostable filter material according to any of claims 1 to 7,
wherein the thermoplastic-impregnated cellulosic nonwoven has a basis weight of at least 15 g/m², preferably between 20 and 90 g/m²; and/or
wherein the thermoplastic-impregnated cellulosic nonwoven has a thickness of at least 60 µm, preferably between 80 and 150 µm; and/or
wherein the thermoplastic-impregnated cellulosic nonwoven has a mean flow pore diameter of between 10 and 50 µm.

9. Compostable packaging element, comprising the compostable filter material according to any of claims 1 to 8.

10. Compostable packaging element of claim 9, wherein the compostable packaging element is a coffee capsule, a coffee capsule lid, or a tea bag.

11. Compostable packaging element according to claim 10, wherein the compostable packaging element is a coffee capsule lid, the lid further comprising a cellulosic support layer.

12. Method for producing a compostable filter material as defined in any of claims 1 to 11, the method comprising:
i) providing a cellulosic nonwoven;
ii) impregnating the cellulosic nonwoven with a thermoplastic binder.

13. Use of a compostable filter as defined in any of claims 1 to 11 in a method for producing coffee.
